**Europäisches Patentamt**

(19) **European Patent Office**

**Office européen des brevets**

(11) Numéro de publication : **0 001 948**
**B1**

(12) **FASCICULE DE BREVET EUROPÉEN**

(45) Date de publication du fascicule du brevet :
**21.10.81**

(21) Numéro de dépôt : **78400148.9**

(22) Date de dépôt : **25.10.78**

(51) Int. Cl.³ : **E 04 D 3/06**

(54) **Dispositif de maintien d'éléments de vitrage ou analogues.**

(30) Priorité : **28.10.77 FR 7732739**

(43) Date de publication de la demande :
**16.05.79 (Bulletin 79/10)**

(45) Mention de la délivrance du brevet :
**21.10.81 Bulletin 81/42**

(84) Etats contractants désignés :
**BE CH DE GB LU NL SE**

㊺ Documents cités
**BE - A - 832 106**
**CH - A - 368 296**
**DE - A - 2 116 087**
**FR - A - 416 261**
**FR - A - 2 292 420**
**GB - A - 511 984**
**US - A - 1 634 987**

(73) Titulaire : **SMAC ACIEROID Société dite:**
**19 à 23 Rue Broca**
**F-75240 PARIS CEDEX 05 (FR)**

(72) Inventeur : **Ovaert, Francis Albert Louis**
**10 Boulevard Jourdan**
**F-75014 Paris (FR)**
Inventeur : **Morice, Jean-Louis**
**19 Rue Edgard Degas**
**F-93600 Aulnay Sous Bois (FR)**

(74) Mandataire : **Lavoix, Jean et al**
**c/o Cabinet Lavoix 2, Place D'Estienne D'Orves**
**F-75441 Paris Cedex 09 (FR)**

Imprimerie Jouve, 17, rue du Louvre, 75001 Paris, France

EP 0 001 948 B1

Dispositif de maintien d'éléments de vitrage ou analogues

La présente invention concerne la réalisation des vitrages d'un édifice, c'est-à-dire des parties internes et externes de cet édifice, qui sont translucides ou transparentes et contribuent ainsi à l'éclairement de l'espace interne. Ces vitrages peuvent ainsi être réalisés en des matériaux divers, tels que le verre, le polyester, le méthacrylate de méthyle, ou autres.

De tels vitrages peuvent constituer par exemple des verrières de toiture, toiture-terrasse ou toiture-sheds, des lanterneaux de divers types ou des murs ou cloisons internes ou externes. Ils sont généralement portés à leurs deux extrémités par une ossature principale et maintenus longitudinalement par des supports également fixés sur l'ossature. Les efforts auxquels ils sont soumis sont ainsi repris par ces supports.

Malheureusement ces vitrages présentent généralement des qualités d'échange thermique défavorables, de sorte qu'ils sont la source de déperdition de chaleur importante, tout particulièrement lorsqu'ils sont situés en toiture ou en mur externe de l'édifice. Pour remédier à cela on utilise généralement des éléments de vitrage à paroi double ou multiple. Toutefois les supports qui maintiennent ces vitrages devant le plus souvent être métalliques, de façon à assurer une meilleure résistance à portée égale, sont thermiquement conducteurs, et par suite, il subsiste au niveau de ces supports un important pont thermique entre les deux faces du vitrage. Par ailleurs, la transformation d'un vitrage à simples parois en un vitrage à parois multiples pose souvent des problèmes, car elle nécessite un démontage pratiquement complet des éléments en place ou le montage, dès l'origine, d'un dispositif spécialement conçu.

La présente invention a pour but de répondre à ces exigences en réalisant un dispositif de maintien d'éléments de vitrage qui supprime pratiquement le pont thermique au niveau des supports et tout en permettant la mise en place de parois supplémentaires de manière simple.

L'invention a en effet pour objet un dispositif de maintien du type comprenant un longeron de support thermiquement conducteur et un couvre-joint, en contact chacun avec les deux éléments adjacents du vitrage, l'un sur une face et l'autre sur la face opposée de ces éléments, qui comporte un profilé thermiquement isolant, muni latéralement de deux saillies longitudinales qui sont intercalées entre deux parois successives de l'élément de vitrage et reprennent les efforts de ces parois et, dans sa partie centrale, d'une nervure en saillie dans l'espace entre deux parois correspondantes des deux éléments adjacents, et entre cette nervure et le longeron de support une lame d'air qui renforce l'isolement et assure une continuité de l'isolation thermique fournie par la lame d'air existant entre les deux parois successives.

Dans un tel dispositif, le profilé contribue au maintien des parois de chacun des deux éléments adjacents et, en même temps, en combinaison avec la lame d'air il assure au niveau du longeron une isolation thermique analogue à celle existant entre les parois elles-mêmes, ce qui réduit ou même supprime les risques de pont thermique en ce point.

Un isolement phonique entre les deux éléments adjacents est également obtenu.

En outre, bien que la lame d'air soit située entre le profilé et le longeron, le profilé thermiquement isolant est essentiellement en contact avec la face de la paroi qui est éloignée de ce longeron de support, de sorte qu'il peut facilement être monté sur un élément de vitrage déjà en place sans déplacement de cette paroi, par un simple démontage du couvre-joint extérieur.

Dans ce qui suit, pour des raisons de simplification et sans aucunement préjuger de la position réelle des différents organes du vitrage par rapport à l'édifice, la partie du vitrage adjacente au longeron sera considérée comme « interne », tandis que la partie proche du couvre-joint sera désignée par « externe ».

La description ci-dessous de modes de réalisation donnés à titre d'exemples non limitatifs, et représentés aux dessins annexés, fera d'ailleurs ressortir les avantages et caractéristiques de l'invention.

Sur ces dessins :
— la Fig. 1 est une vue en coupe transversale d'un dispositif de maintien, en position entre deux éléments de vitrage ;
— la Fig. 2 est une vue analogue à la Fig. 1, d'une variante de réalisation ;
— la Fig. 3 est une vue en coupe transversale d'un dispositif de maintien muni d'un isolant sur sa surface interne ;
— la Fig. 4 est une vue en coupe transversale d'une autre variante de réalisation ;
— la Fig. 5 est une vue en coupe transversale d'un dispositif de maintien monté entre des éléments de vitrage à triple paroi.

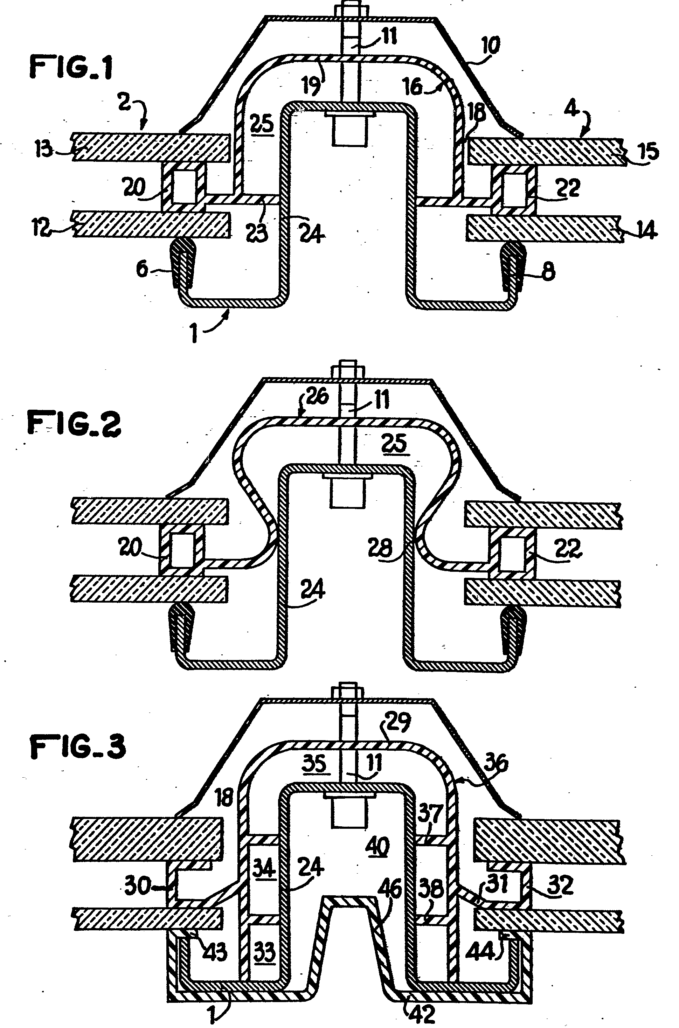

Le dispositif de maintien, objet de l'invention comporte, de la manière classique, un longeron de support 1 qui est destiné à être fixé à ses deux extrémités sur une ossature principale qui soutient la périphérie de l'ensemble du vitrage. Comme le montre la Fig. 1, le support est monté entre deux éléments de vitrage adjacents, respectivement 2 et 4. Ce support 1 comporte deux rebords longitudinaux 6, 8, qui viennent chacun en contact avec l'un des deux éléments de vitrage. Les rebords 6 et 8 du longeron de support 1, sont généralement en appui sur la face interne des éléments de vitrage 2 et 4, tandis que la face externe de ces mêmes éléments de vitrage est en contact avec un couvre-joint 10 retenu par une vis 11 ou tout autre organe analogue fixé au support 1.

Dans le cas d'un vitrage à parois multiples, chacun des éléments 2 et 4 comporte au moins deux parois respectivement 12 et 13, et 14 et 15. En conséquence, les rebords 6, 8 du support 1 sont en appui sur la face interne de la paroi interne 12, 14 de chacun des éléments de vitrage, tandis que le couvre-joint 10 est en contact avec la surface extérieure de la plaque extérieure 13, 15 respectivement de ces mêmes éléments de vitrage.

Le dispositif de maintien de l'invention comporte en outre un profilé thermiquement isolant, 16, placé dans l'espace 18 laissé libre entre les deux éléments de vitrage 2 et 4. Ce profilé 16 comporte en effet un bossage, ou nervure, central 19 dont la largeur est légèrement inférieure à celle de l'espace 18. Cette nervure 19 dépasse à l'extérieur de l'espace 18, par exemple sur la face extérieure des éléments de vitrage, sous le couvre-joint 10. Elle se prolonge vers l'intérieur au-delà de la paroi externe 13 ou 15, et est munie de deux saillies ou bourrelets longitudinaux, respectivement 20 et 22, placés chacun entre les deux parois d'un même élément de vitrage. Ainsi le bourrelet 20 est placé entre les parois 12 et 13 de l'élément de vitrage 2, tandis que le bourrelet 22 est interposé entre les parois 14 et 15 de l'élément de vitrage 4. Les parois correspondantes 12 et 14 ou 13 et 15 des deux éléments de vitrage étant semblables les deux bourrelets 20 et 22 sont identiques. Leur forme et leur section sont choisies de manière à leur permettre d'assurer le support de la paroi extérieure 13 ou 15 et la reprise des efforts qui s'exercent sur elle. En outre, comme ils sont réalisés en matériau thermiquement isolant de la même manière que la nervure 19 et sont même de préférence d'une seule pièce avec cette nervure, ces bourrelets assurent un isolement thermique entre les deux parois de l'élément 2 ou 4 et ferment la lame d'air existant entre les deux parois.

La nervure 19 délimite entre le profilé 16 et le longeron 24 une lame d'air assurant l'isolement thermique, qui est sans communication avec l'extérieur du vitrage, c'est-à-dire avec l'espace entre le profilé et le couvre-joint.

Comme le montre la Fig. 1, la lame d'air peut être obtenue grâce à un profilé 16 dont la nervure 19 est creuse et est munie à sa partie inférieure d'une fente longitudinale dans laquelle vient s'emboîter une nervure axiale 24 du longeron de support 1. La surface interne de la nervure 19 et la surface externe de la nervure 24 du support délimitent entre elles une lame d'air 25 qui entoure la partie supérieure de la nervure 24 du support, à l'intérieur de l'espace 18 entre les deux éléments de vitrage. La coopération de cette lame d'air 25 avec le profilé thermiquement isolant qui constitue la nervure 19 et les bourrelets 20 et 22, assure une coupure thermique très efficace entre la face interne et la face externe du vitrage, au niveau du dispositif de maintien.

On constate en outre, un isolement phonique entre les deux éléments de vitrage 2 et 4.

Comme le montre la Fig. 1, le profilé 16 peut être formé par deux bandes plates longitudinales 23 munies chacune d'un bourrelet respectivement 20 et 22, et en contact sur leur bord opposé à ce bourrelet avec la nervure 24 du support, ces bandes 23 étant reliées entre elles par une paroi incurvée qui constitue la nervure 19. Il peut également, selon une autre variante de réalisation représentée sur la Fig. 2 en 26, avoir une section dont la forme est sensiblement celle d'un Ω, c'est-à-dire comporter une bande plate centrale correspondant à la partie supérieure de la nervure 19 qui est prolongée sur chacun de ses bords par des éléments à double courbure, terminés chacun par un bourrelet 20 ou 22 respectivement. La partie rétrécie 28 du Ω vient en contact avec la nervure 24 du longeron de support 1 et enferme ainsi une lame d'air 25 entre cette nervure et le profilé 26. Comme dans le mode de réalisation précédent, les bourrelets 20 ou 22 ont une section rectangulaire et offrent ainsi un appui efficace aux deux parois de l'élément de vitrage correspondant.

Un tel profilé 26 est d'une réalisation extrêmement simple et peut facilement s'adapter sur des longerons de support présentant des nervures 24 de formes variables. Par exemple la nervure 24, qui sur les Fig. 1 et 2 a une section sensiblement rectangulaire, pourrait avoir une section trapézoïdale, comporter des décrochements successifs, ou avoir toute autre forme.

Selon une autre forme de réalisation, pour envelopper plus complètement le support 1 on utilise un profilé 36 qui comporte une nervure centrale délimitée par une paroi mince de section sensiblement en forme de U 29. Chacune des branches de U porte une bande extérieure 31 en saillie, dont l'extrémité libre est recourbée deux fois sur elle-même de façon à constituer un bourrelet 30 ou 32. Les branches du U 29 se prolongent au-delà des bandes 31, de sorte que la nervure 29 entoure pratiquement la totalité de la nervure 24 du support 1 ; elle vient en appui sur la base de ce support et délimite ainsi une lame d'air en forme de U, autour de la nervure 24. De préférence cette lame d'air est divisée en plusieurs lames successives, 33, 34, 35, par des nervures 37 et 38 partant chacune des branches du U de la nervure 29 et se prolongeant jusqu'au contact avec la nervure 24 (Fig. 3).

Une seconde lame d'air 40 peut être emprisonnée à l'intérieur de la nervure 24 du support 1 grâce à un second profilé en matériau thermiquement isolant disposé sur la face interne de ce support 1 et le recouvrant totalement. Ce profilé 42 peut être plat et avoir une section en U, de sorte qu'il est en appui sur la face interne du support 1 et recouvre les rebords latéraux 6 et 8. Selon une variante de réalisation représentée sur la Fig. 3, chacun des côtés du profilé 42 est replié entre le rebord 6 ou 8 correspondant et la plaque interne 12 ou 14, de sorte que cette plaque est en appui sur son rebord extrême 43 ou 44. Bien entendu, la partie centrale du profilé 42 peut avoir différentes formes, par exemple ce profilé 42 peut comporter une nervure centrale 46 qui fait saillie à l'intérieur de la nervure 24, comme représenté.

Bien entendu, les bourrelets 30 et 32 pourraient être constitués par des boudins creux de section carrée ou rectangulaire, comme les boudins 20 et 22 du mode de réalisation précédent. Ils peuvent également être formés par des replis des extrémités des bandes 31 dirigées en sens inverse et comporter une face ouverte en regard de la paroi 12 ou 14 et non plus en regard de l'espace 18 comme représenté sur la Fig. 3. La forme du profilé thermiquement isolant peut ainsi facilement être adaptée au matériau qui constitue les parois 12, 13 ou 14, 15 de chacun des éléments de vitrage et à la forme particulière du vitrage lui-même. En outre les parois 12 et 13 ou 14 et 15 d'un même élément de vitrage peuvent avoir les mêmes dimensions en longueur et en largeur, et même en épaisseur, ou comme le montre la Fig. 3 avoir des épaisseurs différentes selon les utilisations.

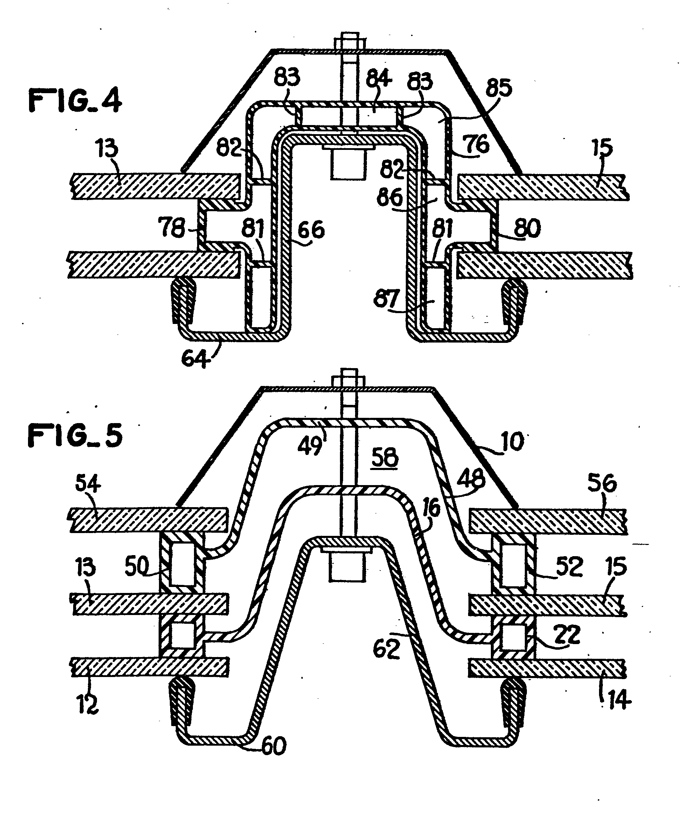

Quel que soit le mode de réalisation choisi, le dispositif de maintien de l'invention est toujours facilement accessible à partir de la face « extérieure » du vitrage, c'est-à-dire à partir du couvre-joint 10. Il est ainsi possible de démonter la paroi extérieure 13 ou 15, ou éventuellement de la mettre en place, alors que la paroi interne 12 ou 14 est déjà installée. Le profilé 16, 26 ou 36 glisse facilement sur la surface de la nervure 24 pour s'emboîter sur elle ou en être séparée. Par suite, il est possible de transformer un vitrage classique à simples parois comportant une paroi interne 12 ou 14 soutenue par un longeron de support 1 et protégée par un couvre-joint 10, en un vitrage à doubles parois même si cette transformation n'a pas été prévue lors de la construction, en ne démontant que le couvre-joint 10 sans suppression ni modification d'organes. Il sera ultérieurement possible de transformer ce vitrage à doubles parois en un vitrage à triples ou à quadruples parois par un démontage analogue. Un nouveau profilé 48 est ainsi mis en place à l'extérieur du profilé existant, ses bourrelets 50 et 52 venant en appui sur la surface externe des parois 13 et 15 et supportant chacun la nouvelle paroi 54 ou 56 de l'élément de vitrage correspondant. Le couvre-joint 10 est ensuite fixé sur cette nouvelle plaque de la même manière que précédemment, comme le montre la Fig. 5.

Le profilé 48 peut avoir la même forme que le profilé déjà en place 16, 26 ou 36, mais il peut également comporter une nervure axiale 49 entièrement ouverte à sa partie inférieure ; une lame d'air 58 est enfermée entre les deux profilés successifs, de même qu'entre le longeron de support 60 et le profilé le plus proche. Comme dans les modes de réalisations précédents, le longeron de support 60, peut comporter une nervure 62 identique à la nervure 24 du longeron 1, ou une nervure de section trapézoïdale comme le montre la Fig. 5.

Dans certains cas, il peut être préférable d'utiliser un profilé creux fermé. Un profilé de ce type est représenté sur la Fig. 4.

Dans le mode de réalisation représenté sur la Fig. 4, le dispositif de maintien comporte un longeron 64 muni d'une nervure axiale 66 et ayant une forme analogue à celle du longeron 1 des Fig. 1 à 3. Sur cette nervure 66 est enfilé un profilé thermiquement isolant, creux 76. Le profilé 76 a une section droite de forme générale en U et est muni, sur chacune de ses faces latérales, d'une nervure extérieure qui constitue un bourrelet 78, 80 de support de la paroi extérieure 13, 15 d'un élément de vitrage. La paroi du profilé 76 est creuse et est divisée en un certain nombre de lames d'air 84 à 87 par des cloisons intérieures 81, 82 et 83. Le nombre des cloisons, ainsi que la dimension des lames d'air sont choisis en fonction de l'importance du vitrage et de l'utilisation à laquelle il est destiné.

Bien entendu, dans ce mode de réalisation, comme dans les précédents, le longeron de support peut avoir toute forme appropriée. Il peut comporter une nervure en saillie en direction du couvre-joint 10, comme représenté ou au contraire une nervure présentant sa face creuse dans la direction de ce couvre-joint. La nervure du profilé peut également être dirigée vers l'extérieur ou vers l'intérieur selon les besoins.

Dans certains cas également la vis 11 peut être remplacée par un système d'encliquetage d'un appendice du support avec un appendice du couvre-joint. Le profilé comporte alors une nervure susceptible de s'interposer entre les deux organes encliquetés, de sorte que l'isolement thermique est maintenu de façon continue dans tout l'espace entre les deux éléments de vitrage. D'autres modifications pourraient encore être apportées aux modes de réalisation du dispositif de maintien, de manière à l'adapter à une utilisation particulière et au type de matériau : verre, polyester, méthacrylate de méthyle, ou autre, qui constitue les parois translucides ou transparentes de l'élément de vitrage, ces parois pouvant être destinées simplement à laisser passer toute ou partie de la lumière, à la filtrer, ou éventuellement à la polariser ou à la réfléchir. Elles peuvent être claires, teintées, filtrantes ou autres.

Il est ainsi possible de réaliser des vitrages adaptés à des bâtiments d'habitation, à des ateliers, bureaux, ou même à des serres, ou à tout autre édifice, que ces vitrages soient destinés à être placés sur des parois externes ou sur des cloisons internes, et de modifier éventuellement ces vitrages pour en améliorer l'isolement thermique, de manière simple et à un prix relativement faible.

## Revendications

1. Dispositif de maintien de deux éléments de vitrage adjacents, du type comportant un longeron de support (1, 60, 64) sur lequel repose, de chaque côté d'une nervure centrale (24, 62, 66), une paroi de vitrage, un couvre-joint élastique espacé de cette nervure centrale et en appui sur la face des deux éléments de vitrage opposée à l'appui du longeron, et des moyens de retenue du couvre-joint supportés par le longeron, caractérisé en ce que les éléments de vitrage ayant plusieurs parois, le dispositif comporte en outre au moins un profilé (16, 26, 36), en matériau thermiquement isolant, qui, sans être fixé au longeron, repose par l'intermédiaire de deux saillies longitudinales (22, 30, 32, 50, 52) sur les deux parois de base (12 et 14) des deux éléments de vitrage et supporte deux deuxièmes parois (13 et 15) directement supérieures de ces mêmes éléments, de sorte qu'il reprend les efforts qui s'exercent sur ces deux parois (13 et 15), et qui délimite une lame d'air épaisse (25, 58, 35-84 à 87) entourant au moins la partie de la nervure centrale du longeron, qui est en saillie par rapport aux deuxièmes parois (13 et 15), mais distante du couvre-joint, le profilé ayant une nervure centrale qui n'est pas en contact avec le couvre-joint.

2. Dispositif de maintien suivant la revendication 1, caractérisé en ce que la nervure (19, 29, 49) du profilé a une largeur légèrement inférieure à celle de l'espace (18) entre les deux éléments de vitrage adjacents et une hauteur supérieure à l'épaisseur de la paroi (13, 15, 54, 56) supportée par la saillie mais nettement inférieure à la distance qui sépare normalement la paroi du couvre-joint.

3. Dispositif de maintien suivant l'une quelconque des revendications 1 et 2, caractérisé en ce que la nervure (76) est formée par une paroi épaisse, creuse, enfermant la lame d'air.

4. Dispositif de maintien suivant la revendication 3, caractérisé en ce que le profilé (76) est entièrement creux et comporte des nervures latérales (78, 80), également creuses, qui constituent les saillies de support des parois correspondantes des éléments de vitrage.

5. Dispositif de maintien suivant la revendication 4, caractérisé en ce que le profilé creux (76) comporte un certain nombre de cloisons internes (81, 82, 83) qui délimitent des lames d'air enfermées (84 à 87).

6. Dispositif de maintien suivant l'une des revendications 1 et 2, caractérisé en ce que la nervure du profilé est formée par une paroi mince (19) recourbée, et munie de saillies internes (23, 37, 38, 28) qui délimitent avec la nervure longitudinale (24) du longeron la lame d'air isolante.

7. Dispositif de maintien suivant la revendication 6, caractérisé en ce que les saillies de la nervure sont formées par des cloisons planes (23, 37, 38).

8. Dispositif de maintien suivant la revendication 6, caractérisé en ce que les saillies de la nervure sont formées par des courbures (28) de la paroi du profilé.

9. Dispositif de maintien suivant l'une des revendications 1 à 8, caractérisé en ce que le profilé (76) est muni d'un prolongement de contact avec le longeron de support (64).

10. Dispositif de maintien suivant l'une des revendications 1 à 9, caractérisé en ce que les saillies longitudinales du profilé sont des bourrelets creux, de section carrée ou rectangulaire (20, 22-50, 52-78, 80).

11. Dispositif de maintien suivant l'une des revendications 1 à 9, caractérisé en ce que les saillies longitudinales (30, 32) ont une section en U et sont ouvertes sur l'une de leurs faces.

12. Dispositif de maintien suivant l'une des revendications 1 à 11, caractérisé en ce qu'il comporte plusieurs profilés thermiquement isolants (48, 16), munis chacun de deux saillies longitudinales (50, 52) intercalées entre deux parois successives d'un élément de vitrage à parois multiples.

**Claims**

1. A device for maintaining two adjacent window pane elements of the type comprising a support longitudinal member (1, 60, 64) on which bears, on each side of a centre rib (24, 62, 66), a window pane wall, an elastic joint cover spaced from said centre rib and bearing against the face of the two window pane elements opposed to the support of the longitudinal element, and means for retaining the joint cover supported by the longitudinal element, characterised in that the window pane elements have a plurality of walls, the device further comprises at least one section member (16, 26, 36) of a heat insulating material which, without being fixed to the longitudinal element, bears through two longitudinal projections (22, 30, 32, 50, 52) on the two base walls (12 and 14) of the two window pane elements and supports two directly upper second walls (13 and 15) of said window pane elements so that it supports the forces which are exerted on said two walls (13 and 15) and which defines a thick layer of air (25, 58, 35-84 to 87) surrounding at least the part of the centre rib of the longitudinal member which projects relative to the second walls (13 and 15) but is spaced from the joint cover, the section member having a centre rib which is not in contact with the joint cover.

2. An maintaining device according to Claim 1, characterised in that the rib (19, 29, 49) of the section member has a width which is slightly less than that of the space (18) between the two adjacent window pane elements and a height exceeding the thickness of the wall (13, 15, 54, 56) supported by the projection but distinctly less than the distance normally between the wall and the joint cover.

3. A maintaining device according to Claim 1 or 2, characterised in that the rib (76) is formed by a thick hollow wall enclosing the air layer.

4. A maintaining device according to Claim 3, characterised in that the section member (76) is completely hollow and comprises lateral ribs (78, 80) which are also hollow and constitute the projections supporting the corresponding walls of the window pane element.

5. A maintaining device according to Claim 4, characterised in that the hollow section member (76) comprises a number of inner partition walls (81, 82, 83) which define enclosed layers of air (84 to 87).

6. A maintaining device according to Claim 1 or 2, characterised in that the rib of the section member is formed by a curved thin wall (19) and provided with inner projections (23, 37, 38, 28) which define with the longitudinal rib of the longitudinal element (24) the insulating layer of air.

7. A maintaining device according to Claim 6, characterised in that the projections of the rib are formed by planar partition walls (23, 37, 38).

8. A maintaining device according to Claim 6, characterised in that the projections of the rib are formed by curved portions (28) of the wall of the section member.

9. A maintaining device according to one of the Claims 1 to 8, characterised in that the section member (76) is provided with an extension contacting the support longitudinal member (64).

10. A maintaining device according to one of the Claims 1 to 9, characterised in that the longitudinal projections of the section member are hollow beads of square or rectangular section (20, 22-50, 52-78, 80).

11. A maintaining device according to one of the Claims 1 to 9, characterised in that the longitudinal projections (30, 32) have a U-shaped section and are open on one of their sides.

12. A maintaining device according to one of the Claims 1 to 11, characterised in that it comprises a plurality of heat insulating section members (48, 16) each of which is provided with two longitudinal projections (50, 52) interposed between two successive walls of a window pane element having a plurality of walls.

**Ansprüche**

1. Haltevorrichtung für zwei benachbarte Verglasungselemente, mit einem längs verlaufenden Stützträger (1, 60, 64), auf welchem zu beiden Seiten einer Mittelrippe (24, 62, 66) jeweils eine Verglasungswand aufruht, einer im Abstand von der Mitterrippe angeordneten und an der der Anlage des Stützträgers abgekehrten Seite der beiden Verglasungselemente anliegenden elastischen Fugenabdeckung, und einer auf dem Stützträger sitzenden Halteeinrichtung für die Fugenabdeckung, dadurch gekennzeichnet, daß mit mehrere Wände enthaltenden Verglasungselementen die Vorrichtung ferner mindestens ein Profilteil (16, 26, 36) aus wärmeisolierendem Werkstoff aufweist, das ohne Befestigung am Stützträger über zwei in Längsrichtung ausgedehnte Vorsprünge (20, 22, 30, 32, 50, 52) auf den beiden Grundwänden (12 und 14) der beiden Verglasungselemente aufruht und zwei direkt darüberliegende zweite Wände (13 und 15) dieser Elemente trägt, so daß es die auf diese beiden Wände (13 und 15) einwirkenden Belastungen aufnimmt, und das eine dickere Luftschicht (25, 58, 35-84 bis 87) begrenzt, die wenigstens den Teil der Mittelrippe des Stützträgers umgibt, der über die zweiten Wände (13 und 15) vorspringt, aber im Abstand von der Fugenabdeckung liegt, wobei das Profilteil eine Mittelrippe aufweist, die mit der Fugenabdeckung nicht in Berührung steht.

2. Haltevorrichtung nach Anspruch 1, dadurch gekennzeichnet, daß die Rippe (19, 29, 49) des Profilteils eine geringfügig unter dem Abstand (18) zwischen den beiden benachbarten Verglasungselementen liegende Breite und eine über der Dicke der durch den Vorsprung abgestützten Wand (13, 15, 54, 56) aber deutlich unter dem Abstand, der üblicherweise die Wand von der Fugenabdeckung trennt, liegende Höhe aufweist.

3. Haltevorrichtung nach mindestens einem der Ansprüche 1 und 2, dadurch gekennzeichnet, daß die Rippe (76) durch eine die Luftschicht einschließende dicke Hohlwand gebildet ist.

4. Haltevorrichtung nach Anspruch 3, dadurch gekennzeichnet, daß das Profilteil (76) gänzlich hohl ist und ebenfalls hohle seitliche Rippen (78, 80) aufweist, welche die Trägervorsprünge für die entsprechenden Wände der Verglasungselemente bilden.

5. Haltevorrichtung nach Anspruch 4, dadurch gekennzeichnet, daß das Hohlprofilteil (76) eine Anzahl innerer Trennwände (81, 82, 83) aufweist, die eingeschlossene Luftschichten (84 bis 87) begrenzen.

6. Haltevorrichtung nach mindestens einem der Ansprüche 1 und 2, dadurch gekennzeichnet, daß die Rippe des Profilteils durch eine dünne Wand (19) gebildet ist, die gekrümmt und mit inneren Vorsprüngen (23, 37, 38, 28) versehen ist, die mit der Längsrippe (24) des Stützträgers die isolierende Luftschicht begrenzt.

7. Haltevorrichtung nach Anspruch 6, dadurch gekennzeichnet, daß die Vorsprünge der Rippe durch ebene Trennwände (23, 37, 38) gebildet sind.

8. Haltevorrichtung nach Anspruch 6, dadurch gekennzeichnet, daß die Vorsprünge der Rippe durch Bögen (28) der Wand des Profilteils gebildet sind.

9. Haltevorrichtung nach mindestens einem der Ansprüche 1 bis 8, dadurch gekennzeichnet, daß das Profilteil (76) mit einem den Stützträger (64) berührenden Berührfortsatz versehen ist.

10. Haltevorrichtung nach mindestens einem der Ansprüche 1 bis 9, dadurch gekennzeichnet, daß die in Längsrichtung ausgedehnten Vorsprünge des Profilteils Hohlwülste (20, 22-50, 52 - 78, 80) mit quadratischem oder rechteckigem Querschnitt sind.

11. Haltevorrichtung nach mindestens einem der Ansprüche 1 bis 9, dadurch gekennzeichnet, daß die in Längsrichtung ausgedehnten Vorsprünge (30, 32) einen U-förmigen Querschnitt aufweisen und auf einer ihrer Seiten offen sind.

12. Haltevorrichtung nach mindestens einem der Ansprüche 1 bis 11, dadurch gekennzeichnet, daß sie mehrere wärmeisolierende Profilteile (48, 16) aufweist, die jeweils mit zwei zwischen zwei aufeinanderfolgenden Wänden eines Mehrwandverglasungselements eingefügten in Längsrichtung ausgedehnten Vorsprüngen (50, 52) versehen sind.

FIG.1

FIG.2

FIG.3

FIG_4

FIG_5